# DEMANDE DE BREVET EUROPEEN

(11) **EP 0 831 008 A1**
(43) Date de publication de la demande: **25.03.1998**
(21) Numéro de dépôt: 97402197.4
(22) Date de dépôt: 22.09.1997
(51) Int. Cl.: B62D 1/10, F16B 21/18

(54) **Système de fixation de volant de véhicule automobile**

(30) Priorité: 23.09.1996 FR 9611559
(71) Demandeur: MAGNETI MARELLI FRANCE, 92000 Nanterre (FR)
(72) Inventeur: Gauthier, Christian, 92200 Neuilly Sur Seine (FR)
(74) Mandataire: Texier, Christian

(57) **Abrégé**

La présente invention concerne un système de fixation de volant de véhicule automobile, caractérisé par le fait qu'il comprend une noix (300) en saillie sur la face arrière du volant et qui comporte des moyens de fixation (314), des moyens (109, 200, 202, 210, 212) sur l'extrémité avant de l'arbre de direction (100), complémentaires des moyens de fixation (314) prévus sur la noix (300), et des moyens à serrage latéral (220, 500) pour assurer l'immobilisation des moyens de fixation (314, 109, 200, 202, 210, 212) prévus respectivement sur la noix (300) du volant et sur l'extrémité avant de l'arbre de direction (100).

## Description

La présente invention concerne le domaine des volants de véhicules automobiles.

Plus précisément la présente invention concerne les moyens de fixation des volants de véhicules automobiles.

Les moyens classiques pour assurer la fixation d'un volant comprennent un embout fileté sur l'arbre de direction, qui traverse le moyeu du volant et reçoit un écrou disposé sur la face avant du volant.

Ces moyens connus ne donnent pas totalement satisfaction de nos jours, notamment pour les véhicules actuels dans lesquels le volant est muni de différents équipements, tels qu'un coussin d'air gonflable, dénommé généralement "air-bag". En effet ces équipements compliquent l'accès à l'écrou de fixation.

La présente invention a maintenant pour but de perfectionner les moyens connus de fixation de volant.

Ce but est atteint selon la présente invention grâce à un système de fixation de volant de véhicule automobile, comprenant :
- une noix en saillie sur la face arrière du volant et qui comporte des moyens de fixation,
- des moyens sur l'extrémité avant de l'arbre de direction, complémentaires des moyens de fixation prévus sur la noix, et
- des moyens à serrage latéral pour assurer l'immobilisation des moyens de fixation prévus respectivement sur la noix du volant et sur l'extrémité avant de l'arbre de direction ,
- une gorge annulaire externe sur la noix du volant,
- un écrou en prise avec l'extrémité avant de l'arbre de direction et qui comporte au moins une gorge annulaire interne, et
- un jonc apte à interférer avec lesdites gorges.

D'autres caractéristiques, buts et avantages de la présente invention apparaitront à la lecture de la description détaillée qui va suivre et en regard des dessins annexés, donnés à titre d'exemple non limitatif, et sur lesquels :

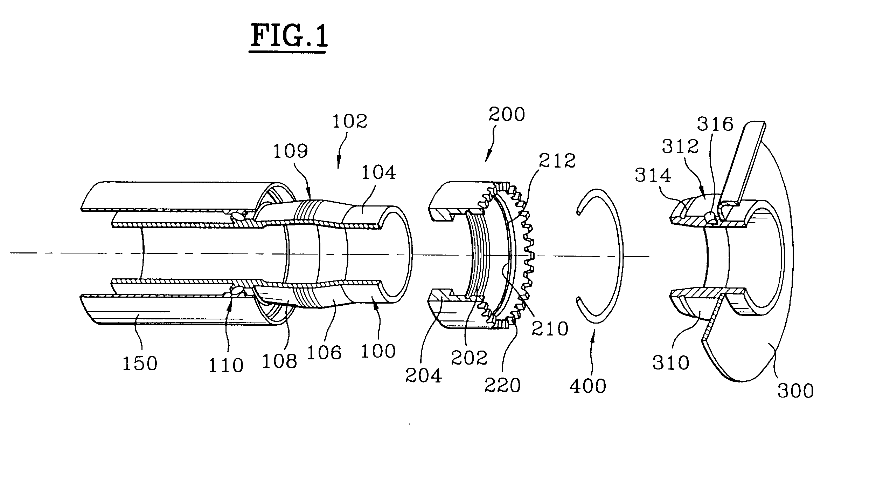

- la figure 1 représente une vue schématique en perspective éclatée d'un système de fixation conforme à la présente invention,

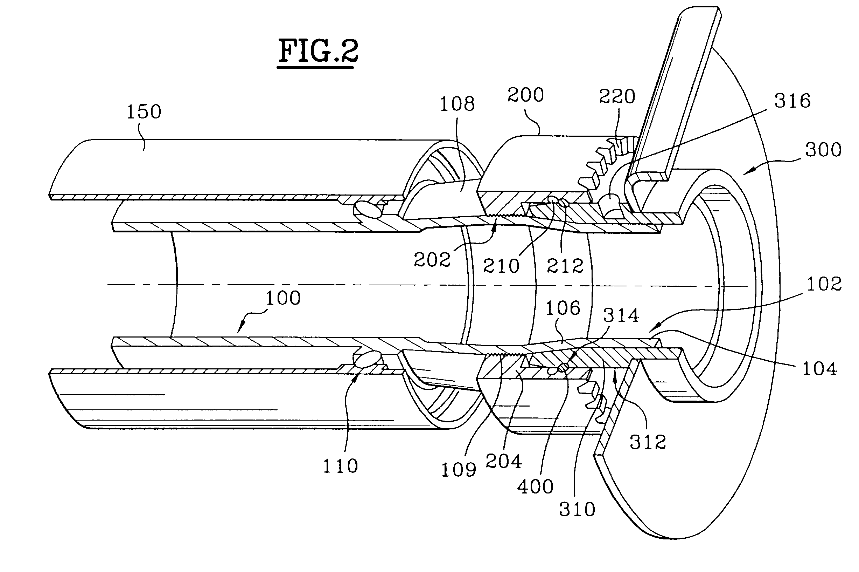

- la figure 2 représente une vue partielle en perspective du même système, en position assemblée,
- les figures 3, 4 et 5 représentent trois vues en coupe longitudinale du système à trois étapes successives du processus de serrage,
- la figure 6 représente une vue latérale d'un système conforme à la présente invention et illustre notamment les moyens de serrage latéral, et

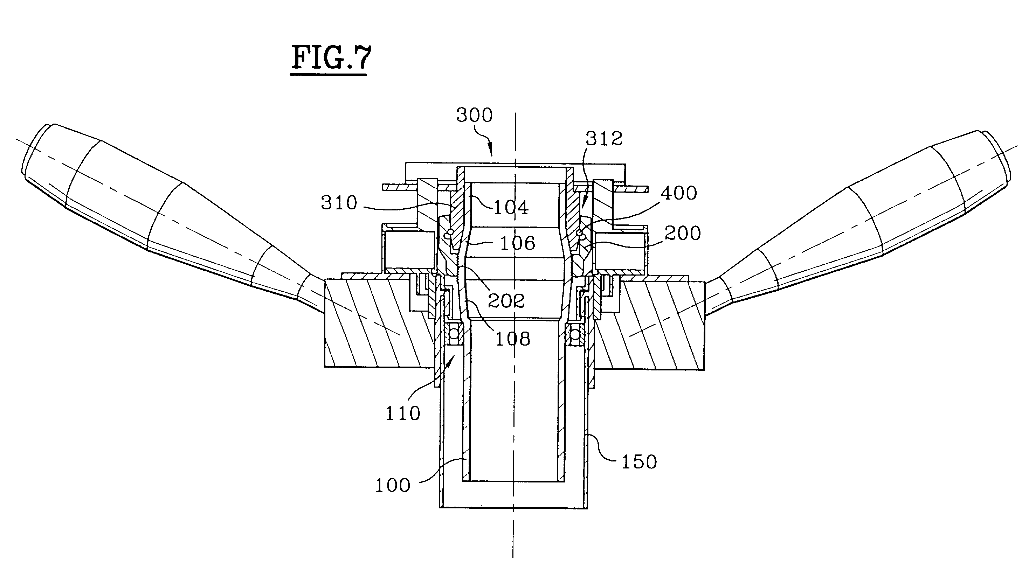

- la figure 7 représente une vue en coupe longitudinale de ce système.

On aperçoit sur les figures annexées un système comprenant un arbre de direction 100, associé à un écrou 200, une noix 300 adaptée pour être solidarisée sur la face arrière d'un volant, et un jonc 400 qui coopère avec l'écrou 200 et la noix 300.

L'arbre 100 tourillonne dans une colonne fixe 150 en étant guidé par au moins un roulement 110.

L'extrémité avant 102 de l'arbre 100, qui émerge de la colonne 200, est effilée.

Plus précisément selon le mode de réalisation préférentiel illustré sur les figures annexées, cette extrémité avant de l'arbre 100 comporte un premier tronçon 104, situé axialement en bout de l'arbre 100, de forme cylindrique, suivi d'un second tronçon 106 de forme tronconique, divergente en éloignement du premier tronçon 104, et enfin d'un troisième tronçon 108, engagé dans la colonne 150, de forme cylindrique, d'un diamètre supérieur au premier tronçon 104.

Le troisième tronçon 108 est muni d'un filetage 109 au niveau de sa zone adjacente au second tronçon 106. Il s'agit de préférence d'un filetage à pas fin pour permettre de garantir un effet de blocage après serrage.

L'écrou 200 est fileté intérieurement sur une partie de sa longueur, la plus proche de la colonne 150. Sur les figures le filetage est référencé 202. Il est prévu au niveau d'un épaississement interne 204 de l'écrou 200.

L'épaississement 204 définit une portée d'appui annulaire, en forme de couronne, dirigée vers l'avant, c'est à dire à l'opposée de la colonne 150.

En avant de cet épaississement fileté 204, la paroi interne cylindrique de l'écrou 200 est munie de deux gorges annulaires : une gorge principale 210 et une gorge auxiliaire 212.

La gorge principale 210 est située entre la gorge auxiliaire 212 et l'épaississement 204. Les deux gorges 210 et 212 sont adjacentes.

La gorge principale 210 est en forme de demi-tore, à concavité dirigée radialement vers l'intérieur.

La gorge auxiliaire 212 est en forme de quart de tore, à concavité dirigée radialement vers l'intérieur et vers la gorge principale 210.

En outre la gorge auxiliaire 212 s'appuie sur un rayon externe inférieur à celui de la gorge principale 210.

Le rayon externe de la gorge auxiliaire 212 est compris entre le rayon externe de la gorge principale 212 et le rayon de l'ouverture de cette gorge principale 212, en étant typiquement égal au rayon à mi-profondeur de la gorge principale 210.

Par ailleurs de préférence l'écrou 200 possède une couronne dentée 220 sur sa tranche dirigée vers l'avant, soit à l'opposée de la colonne 150.

Cette couronne 220 est utilisée pour assurer l'entrainement à rotation de l'écrou 200.

Le jonc 400 est formé d'un tore annulaire. Il est constitué de préférence en acier ressort, type corde à piano, par exemple d'un diamètre de 2,5mm.

Le jonc 400 est ouvert pour tolérer de légères déformations radiales. Le rayon externe au repos, du jonc 400, est complémentaire du rayon externe de la gorge auxiliaire 212.

Par ailleurs le diamètre du fil formant le jonc 400 est complémentaire de la profondeur de la gorge principale 210. Ainsi le jonc 400 peut, par extension radiale, être contenu intégralement dans la gorge principale 210, comme on l'expliquera par la suite.

Le rayon du fil composant le jonc 400 est également complémentaire du rayon de la cavité formant la gorge annulaire auxiliaire 212.

La noix 300 peut faire l'objet de nombreux modes de réalisation.

Elle comprend un fut cylindrique 310 dirigé vers la colonne 150.

Le rayon interne du fut 310 est complémentaire du rayon externe du premier tronçon 104. Le rayon externe du fut 310 est complémentaire du rayon interne de l'écrou 200.

Ainsi, comme on le voit sur les figures annexées, le fut 310 est conçu pour être engagé entre l'extrémité avant de l'arbre de direction 100 et l'écrou 200.

A cette fin, l'extrémité arrière du fut 310, dirigée vers la colonne 150, est de préférence effilée pour faciliter cet engagement.

Le fut 310 est muni sur sa surface externe 312, d'une gorge annulaire 314, conçu pour recevoir partiellement le jonc 400.

La gorge 314 a de préférence une forme de demi-tore à concavité dirigée radialement vers l'extérieur.

Le rayon de la cavité formant la gorge 314 est complémentaire du rayon du fil composant le jonc 400.

Ainsi les gorges 314 et 212, lorsqu'elles sont juxtaposées, définissent un logement complémentaire du jonc 400.

En outre de préférence, le fut 310 est muni sur sa surface extérieure 312, d'au moins un perçage radial 316. Celui-ci est destiné à recevoir la queue d'un outil de serrage rotatif comportant un pignon apte à venir en prise avec la couronne dentée 220 de l'écrou pour assurer une rotation relative entre le fut 310 et l'écrou 200 et par conséquent entre l'arbre 100 et l'écrou 200.

Pour procéder à l'assemblage du système conforme à la présente invention, on procède essentiellement comme suit.

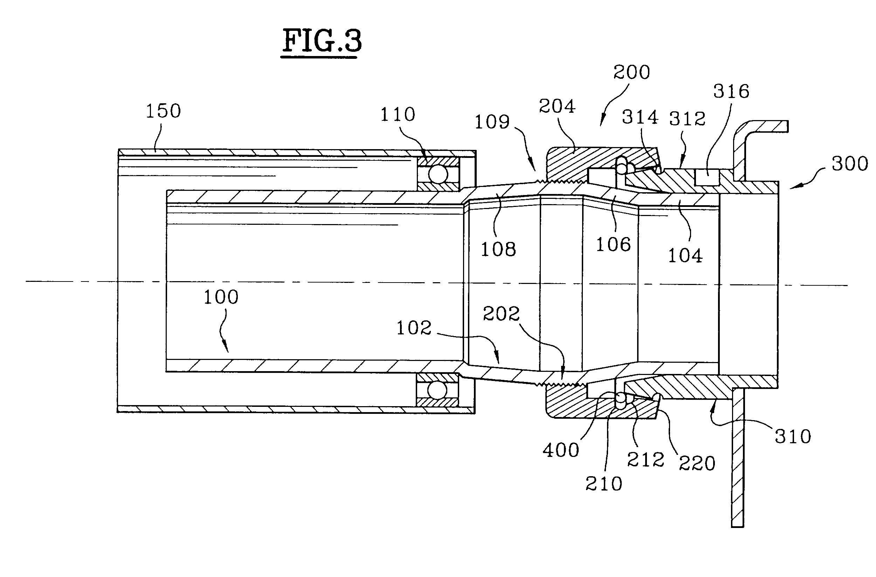

Comme illustré sur la figure 3, l'écrou 200 équipé du jonc 400 dans la gorge principale 210, est monté sur le filetage 109 et la noix 300 est engagée entre l'écrou 200 et l'arbre de direction 100.

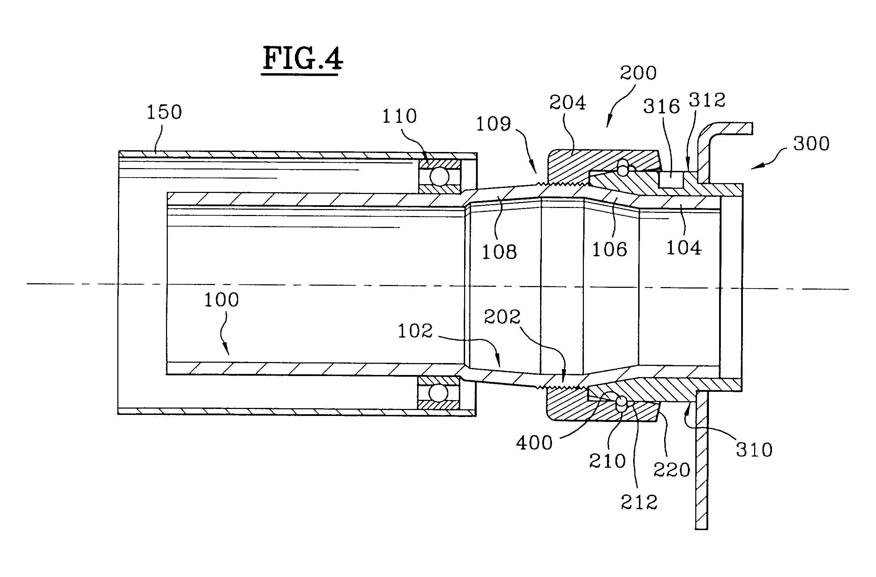

Puis, comme illustré sur la figure 4, la noix 300 et le volant qui en est solidaire sont poussés axialement en butée sur le jonc 400 de sorte que ce dernier pénètre partiellement dans la gorge 314 de la noix 300. Plus précisément au cours de la progression de la noix 300, le jonc 400 est tout d'abord déformé en extension radiale par le fut 310 et pénètre au cours de cette phase dans le fond de la gorge principale 210 adaptée pour recevoir celui-ci, puis reprend élastiquement sa position de repos en se rétractant radialement lorsque la gorge 314 de la noix 300 est située en regard.

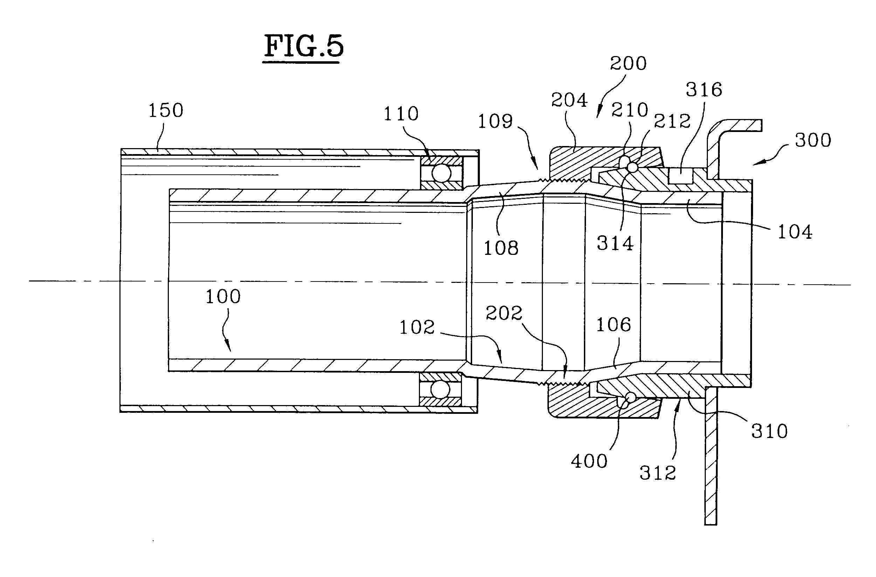

Il reste alors à assurer une rotation de l'écrou 200 sur le filetage 109, pour assurer une translation de l'écrou 200 de sorte que le jonc 400 soit placé en regard de la gorge auxiliaire 212, comme illustré sur la figure 5. Le jonc 400 est alors emprisonné radialement entre le fond de la gorge 314 formée dans la noix 300 et le fond de la gorge auxiliaire 212 formée dans l'écrou 200.

Dans cette position la noix 300 vient en butée axiale contre le tronçon 106 de l'arbre de direction. Par ailleurs le jonc 400 est en butée radialement sur l'extérieur contre l'écrou 200. Il ne peut par conséquent s'expanser pour autoriser un retrait de la noix 300. De ce fait la noix 300 et le volant sont immobilisés en toute sécurité.

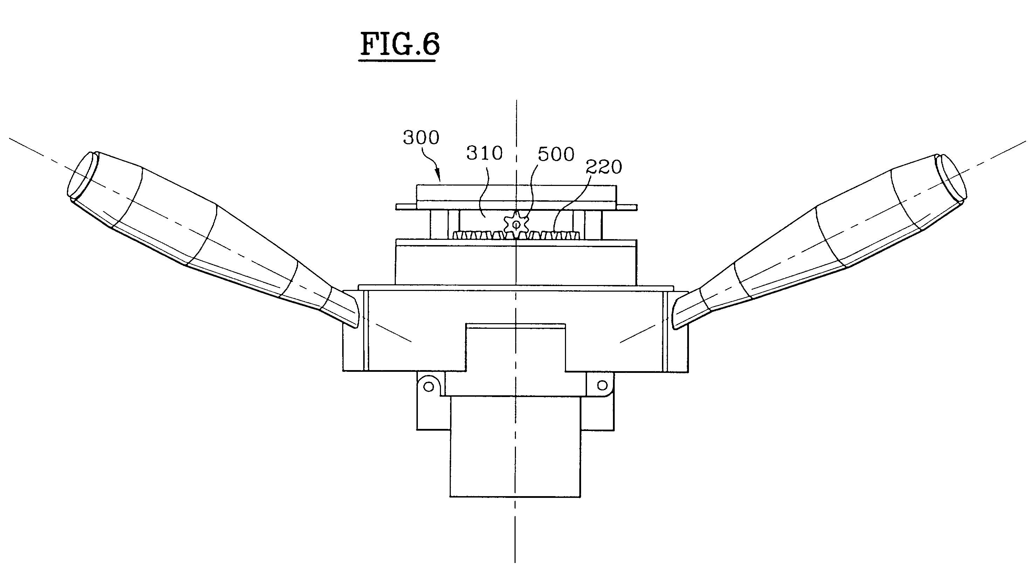

Cette rotation de l'écrou 200 peut être assurée simplement par rotation d'un outil engagé dans le perçage 316 et comportant un pignon 500 en prise avec la couronne 220. Un tel pignon 500 est schématisé sur la figure 6.

On notera que les moyens conformes à la présente invention permettent une fixation simple du volant. Ils autorisent en effet un accès aisé au moyen de serrage 200 malgré un environnement encombré notamment par les moyens de liaison avec les équipements portés par le volant.

Par ailleurs le système de la présente invention autorise également un démontage aisé de la noix et du volant, puisqu'il suffit pour assurer ce démontage de déserrer l'écrou 200 par rotation en sens inverse du pignon 500.

Bien entendu la présente invention n'est pas limitée au mode de réalisation qui vient d'être décrit, mais s'étend à toutes variantes conformes à son esprit.

## Revendications

1. Système de fixation de volant de véhicule automobile, caractérisé par le fait qu'il comprend :
- une noix (300) en saillie sur la face arrière du volant et qui comporte des moyens de fixation (314),
- des moyens (109, 200, 202, 210, 212) sur l'extrémité avant de l'arbre de direction (100), complémentaires des moyens de fixation (314) prévus sur la noix (300),
- des moyens à serrage latéral (220, 500) pour assurer l'immobilisation des moyens de fixation (314, 109, 200, 202, 210, 212) prévus respectivement sur la noix (300) du volant et sur l'extrémité avant de l'arbre de direction (100),
- une gorge annulaire externe (314) sur la noix (300) du volant, un écrou (200) en prise avec l'extrémité avant de l'arbre de direction (100) et qui comporte au moins une gorge annulaire interne (210, 212), et
- un jonc (400) apte à interférer avec lesdites gorges (314, 210, 212).

2. Système selon la revendication 1, caractérisé par le fait que l'extrémité avant (102) de l'arbre (100), qui émerge de la colonne (200), est effilée.

3. Système selon la revendication 2, caractérisé par le fait que l'extrémité avant de l'arbre (100) comporte un premier tronçon (104), situé axialement en bout de l'arbre (100), de forme cylindrique, suivi d'un second tronçon (106) de forme tronconique, divergente en éloignement du premier tronçon (104), et d'un troisième tronçon (108), engagé dans la colonne (150), de forme cylindrique, d'un diamètre supérieur au premier tronçon (104).

4. Système selon la revendication 3, caractérisé par le fait que le troisième tronçon (108) est muni d'un filetage (109) au niveau de sa zone adjacente au second tronçon (106).

5. Système selon la revendication 4, caractérisé par le fait que le filetage (109) est un filetage à pas fin pour permettre de garantir un effet de blocage après serrage.

6. Système selon l'une des revendications 1 à 5, caractérisé par le fait que l'écrou (200) est munie de deux gorges annulaires : une gorge principale (210) en forme de demi-tore, à concavité dirigée radialement vers l'intérieur et une gorge auxiliaire (212) en forme de quart de tore, à concavité dirigée radialement vers l'intérieur et vers la gorge principale (210).

7. Système selon la revendication 6, caractérisé par le fait que la gorge auxiliaire (212) s'appuie sur un rayon externe inférieur à celui de la gorge principale (210), compris entre le rayon externe de la gorge principale (212) et le rayon de l'ouverture de cette gorge principale (212), en étant typiquement égal au rayon à mi-profondeur de la gorge principale (210).

8. Système selon l'une des revendications 1 à 7, caractérisé par le fait que l'écrou (200) possède une couronne dentée (220) sur sa tranche opposée à la colonne (150).

9. Système selon l'une des revendications 1 à 8, caractérisé par le fait que le jonc (400) est formé d'un tore annulaire ouvert.

10. Système selon l'une des revendications 1 à 9, caractérisé par le fait que le rayon externe au repos, du jonc (400), est complémentaire du rayon externe de la gorge auxiliaire (212).

11. Système selon l'une des revendications 1 à 10, caractérisé par le fait que le diamètre du fil formant le jonc (400) est complémentaire de la profondeur de la gorge principale (210).

12. Système selon l'une des revendications 1 à 11, caractérisé par le fait que la noix (300) comprend un fut cylindrique (310) sur lequel est formé une gorge annulaire (314), le rayon interne du fut (310) étant complémentaire de l'extrémité de l'arbre de direction (100), tandis que le rayon externe du fut (310) est complémentaire du rayon interne de l'écrou (200).

13. Système selon l'une des revendications 1 à 12, caractérisé par le fait que la gorge (314) formée dans la noix (300) a une forme de demi-tore à concavité dirigée radialement vers l'extérieur.

14. Système selon la revendication 12, caractérisé par le fait que le fut (310) est muni sur sa surface extérieure (312), d'au moins un perçage radial (316) destiné à recevoir la queue d'un outil de serrage rotatif comportant un pignon apte à venir en prise avec une couronne dentée (220) de l'écrou (200).
